# EUROPEAN PATENT APPLICATION

(11) **EP 4 525 395 A1**
(43) Date of publication of application: **19.03.2025**
(21) Application number: 23829550.5
(22) Date of filing: 30.03.2023
(51) Int. Cl.: H04L 45/24

(54) **COMMUNICATION STATE SWITCHING METHOD, PORT CONFIGURATION METHOD, AND COMMUNICATION SYSTEM AND MEDIUM**

(30) Priority: 30.06.2022 CN 202210761370
(71) Applicant: ZTE Corporation, Shenzhen, Guangdong 518057 (CN)
(72) Inventor: LIN, Ning, Shenzhen, Guangdong 518057 (CN)
(74) Representative: Savi, Massimiliano
(86) International application number: PCT/CN2023/084990
(87) International publication number: WO 2024/001359

(57) **Abstract**

Provided in the present application are a communication state switching method for a link aggregation system. The method comprises: in response to a communication fault between a first switch port and a server port, a gateway device receiving fault information; a second switch port establishing a communication connection with the server port; a second switch receiving a host route corresponding to the server port; the second switch generating a 32-bit mask sub-network route according to the host route; the gateway device receiving the 32-bit mask sub-network route; and according to the 32-bit mask sub-network route, the gateway device establishing a communication connection with the server port by means of the second switch. Further provided in the present application are a port configuration method for a link aggregation system, and a communication system, a computer-readable storage medium and a computer program product.

## Description

### CROSS-REFERENCE TO RELATED APPLICATION

This application is filed on the basis of the Chinese patent application No. 202210761370.1 filed June 30, 2022 to the CNIPA, and claims priority of the Chinese patent application, the entire contents of which are incorporated herein by reference.

### TECHNICAL FIELD

The present disclosure relates to but is not limited to the field of telecommunication.

### BACKGROUND

Multi-chassis Link Aggregation Group (MLAG) is a mechanism to achieve cross-device link aggregation. Through the cross-device link aggregation by means of one device with another two devices, the link reliability is improved from single board level to device level, and an active-active (dual active) system is formed. In the related art, the difficulty of configuration and maintenance is improved in order to ensure the redundancy provision and backup between the main device and the backup device in the MLGA switch system. It is thus important to simplify the interaction process between devices in MLGA system and reduce the difficulty of maintenance.

### SUMMARY

Provided are a method for switching communication state, a method for port configuration in a communication system, a communication system, a storage medium, and a program product in various embodiments of the present disclosure.

According to a first aspect of the present disclosure, a method for switching communication state in a link aggregation system is provided. The method includes: performing following operations, in response to a communication failure between a first switch port and a server port: receiving failure information by a gateway device; establishing a first communicative connection between the server port and a second switch port; receiving a host route corresponding to the server port by a second switch; generating a 32-bit mask subnet route according to the host route by the second switch; receiving the 32-bit mask subnet route by the gateway device; and establishing, a second communicative connection with the server port through the second switch by the gateway device, according to the 32-bit mask subnet route.

According to a second aspect of the present disclosure, a method for switching communication state in a link aggregation system is provided. The method includes: performing following operations, in response to a communication failure between a gateway device port and a first switch port: disconnecting a first communicative connection with a server by a first switch; establishing a second communicative connection between the server port and a second switch port; receiving a host route corresponding to the server port by a second switch; generating a 32-bit mask subnet route according to the host route by the second switch; receiving the 32-bit mask subnet route by the gateway device; and establishing a third communicative connection between the server port and the gateway device through the second switch according to the 32-bit mask subnet route.

According to a third aspect of the present disclosure, a method for port configuration in a link aggregation system is provided. The method includes: acquiring a subnet route according to a host route sent by a server, where the subnet route is a 32-bit mask subnet route; and establishing a mapping relationship with a server port.

According to a fourth aspect of the present disclosure, a communication system is provided. The system includes a processor; and a memory storing instructions executable by the processor which, when executed by a processor, causes the processor to carry out the method as described in any one of the first aspect, the second aspect or the third aspect above.

According to a fifth aspect of the present disclosure, a computer-readable storage medium is provided. The computer-readable storage medium stores a computer-executable instruction which, when executed by a processor, causes the processor to carry out the method as described in any one of the first aspect, the second aspect or the third aspect above.

According to a sixth aspect of the present disclosure, a computer program product is provided. The computer program product includes a computer program or a computer instruction stored in a computer-readable storage medium which, when executed by a processor of a computer device, causes the computer device to carry out the method as described in any one of the first aspect, the second aspect or the third aspect above.

### BRIEF DESCRIPTION OF DRAWINGS

FIG. 1 depicts a schematic diagram showing a peer-link in a link aggregation communication system;
FIG. 2 depicts a schematic diagram showing a communication system where a method according to an embodiment of the present disclosure may be applied;
FIG. 3 depicts a schematic diagram showing a method for port configuration in a link aggregation system according to an embodiment of the present disclosure;
FIG. 4 depicts a schematic diagram showing a scenario where a method for switching communication state in a link aggregation system according to an embodiment of the present disclosure may be applied;
FIG. 5 depicts a schematic diagram showing a method for switching communication state in a link aggregation system according to an embodiment of the present disclosure;
FIG. 6 depicts a schematic diagram showing a method for switching communication state in a link aggregation system according to an embodiment of the present disclosure;
FIG. 7 depicts a schematic diagram showing a method for switching communication state in a link aggregation system according to an embodiment of the present disclosure;
FIG. 8 depicts a schematic diagram showing a method for switching communication state in a link aggregation system according to an embodiment of the present disclosure;
FIG. 9 depicts a schematic diagram showing a method for switching communication state in a link aggregation system according to an embodiment of the present disclosure; and
FIG. 10 depicts a schematic diagram showing a method for switching communication state in a link aggregation system according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

In the description of various embodiments of the present disclosure, the terms such as provide, mount or connect should be broadly understood, unless otherwise specified, and those having ordinary skills in the art can reasonably determine the specific meanings of the above terms in various embodiments of the present disclosure in conjunction with the specific contents of the technical scheme. In the embodiments of the present disclosure, the terms "further", "exemplary" or "optional" are used as examples, illustrations or explanations, and should not be interpreted as being more preferred or advantageous than other embodiments or designs. The use of words such as "further", "exemplary" or "optional" is intended to present related concepts in a concrete way.

Embodiments of that present disclosure may be executed in a computer system, such as a set of computer-executable instructions. Furthermore, in some cases, the steps shown or described may be performed in a different order than the logical order shown in the flowcharts of the drawings.

The embodiment of the present disclosure can be applied to a variety of communication systems, such as a Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, Universal Mobile Telecommunications System (UMTS), 5G, Beyond Fifth Generation (B5G), 6th Generation (6G) system, etc., and the present disclosure is not limited thereto.

Multi-chassis Link Aggregation Group (MLAG) is a mechanism to achieve cross-device link aggregation. Through the cross-device link aggregation by one device with another two devices, the link reliability is improved from single board level to device level, and a dual active system is formed.

In the related art, in order to ensure the redundant backup between the main device and the backup device in the MLGA switch system, it is necessary to establish a peer-link. In other words, the main device and the backup device are connected through a peer-link link. However, the above scheme improves the difficulty of configuration and maintenance.

It is thus important to simplify the interaction process between devices in the MLGA system and reduce the difficulty of maintenance.

In the cross-device link aggregation switch system, the devices for link aggregation can be not only switches, but also other network devices such as routers. Several embodiments of the present disclosure will be illustrated with gateway devices, switches and servers by way of example, but it is known to those having ordinary skills in the art that the method involved in any one of the embodiments of the present disclosure is also applicable to cross-device link aggregation systems composed of other network devices.

It is necessary to provide redundancy and backups between two devices in the link aggregation communication system, and to synchronize the entries between the two devices, so it is necessary to establish a peer link between the main and backup devices. This link is responsible for the protocol interaction between two devices and the data interaction when the link between the two devices fails.

In order to elaborate this technical scheme in greater details, the link aggregation communication system is further illustrated by way of example with the link aggregation communication system of peer-link.

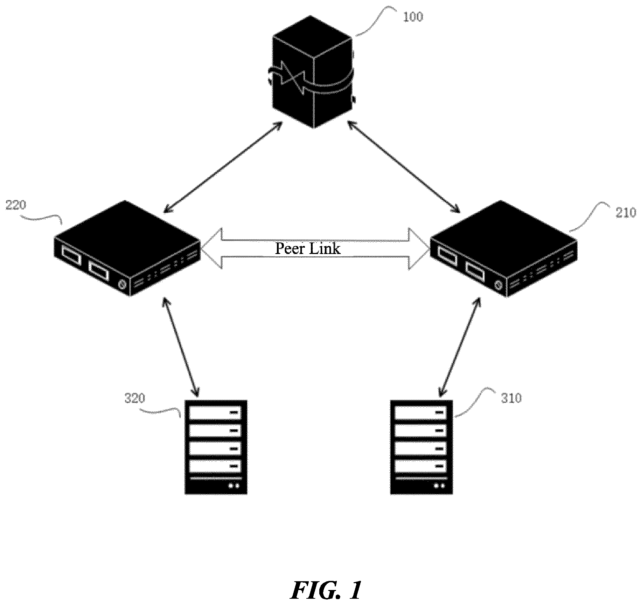

FIG. 1 depicts a schematic diagram showing a peer-link in a link aggregation communication system. As shown in FIG. 1, the system includes at least a gateway device 100, a first switch 210, a second switch 220, and several servers 300. The servers 300 shown in FIG. 1 include a first server 310 and a second server 320. The first switch 210 and the second switch 220 are connected through a peer link to ensure that the system will continue to operate when link failure occurs. In an example, an interactive protocol is run between the first switch 210 and the second switch 220 to ensure that all entries between the two devices are synchronized. In this case, when the link failure occurs, all traffic can be switched to another device for forwarding, so as to avoid long service interruption of uplink and downlink traffic. However, the above-mentioned link aggregation configuration is complicated, and it is necessary to run interactive protocols between the main and backup devices, occupying device resources. In addition, the main and backup devices also need to synchronize the entries, so the entry resources of two devices not only include its own forwarding information of all upstream and downstream devices connected to the ego device, but also need to synchronize the forwarding information of all upstream and downstream devices of the other one device, which is a great waste of the entry resources of the devices.

In view of this, there is provided a method for switching communication state, a method for port configuration in a communication system, a communication system, a storage medium, and a program product in various embodiments of the present disclosure. By adopting the method and system set forth in the embodiments of the present disclosure, there is no need to provide a peer link, that is, the process of mutual entries synchronization between the main and backup devices is not involved, the interaction process is simplified, and the occupied resources are reduced. According to an embodiment of the present disclosure, the main and backup devices independently undertake the forwarding task, and when a failure occurs or a switch between main and backup devices is to be performed, the completed link switching method is adopted. According to the method set forth in several embodiments of the present disclosure, two devices in the cross-device link aggregation system, such as switches, can operate independently, and the effect of mutual link backup can be achieved without establishing a peer link between the first switch and the second switch and without complicated protocol interaction and data interaction between the two switches. According to the method set forth in several embodiments of the present disclosure, only the link-level protection of the cross-device link aggregation system can be achieved, and two switches can operate independently. As such, the complex interaction process between devices is optimized, the maintainability of network devices is improved, the redundancy provision and protection of network devices is also realized, and the reliability of the network is improved.

Embodiments of the present disclosure will be further illustrated with reference to the drawings.

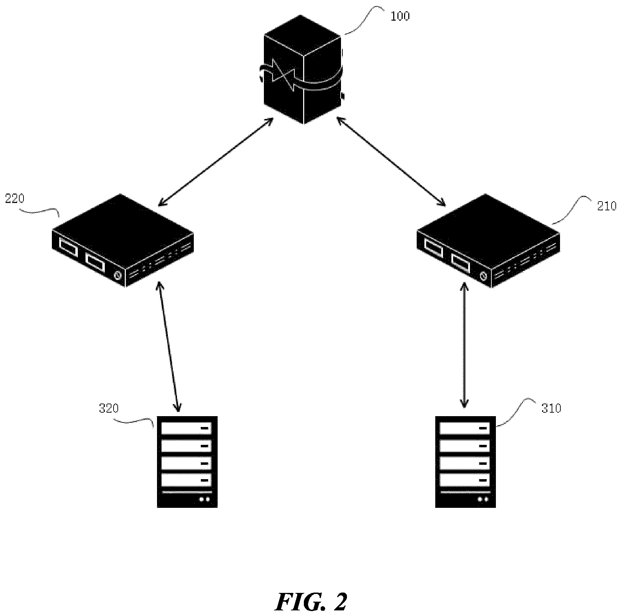

FIG. 2 depicts a schematic diagram showing a communication system where a method according to an embodiment of the present disclosure may be applied. As shown in FIG. 2, the system includes at least a gateway device 100, a first switch 210, a second switch 220, and several servers 300. The servers 300 shown in FIG. 2 include a first server 310 and a second server 320. It can be understood that the embodiments of the present disclosure are also applicable to the case where one server is deployed. Compared with FIG. 1, the link aggregation system of this embodiment does not need to set a peer link between the first switch 210 and the second switch 220. By adopting this technical scheme, when the system has a link-level or device-level failure, the forwarding link of the failure device can be quickly switched to another device through the technology of port cooperation of the failure device and host route revocation. The effect that two devices of the cross-device link aggregation system operate independently is achieved. In addition to this, the effect that the first switch 210 and the second switch 220 perform forwarding back-up for each other.

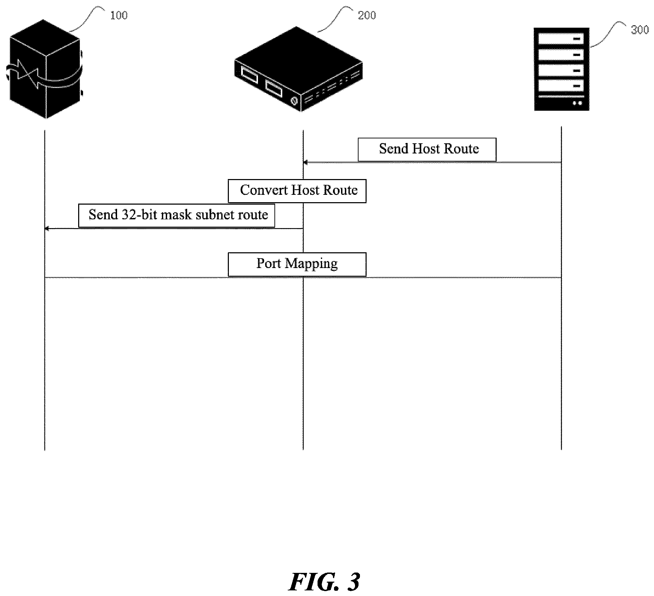

FIG. 3 depicts a schematic diagram showing the method for port configuration in the link aggregation system according to an embodiment of the present disclosure. As shown in FIG. 3, the switch device 200 of the link aggregation system is in communicative connection with the gateway device 100 (uplink) and the server 300 (downlink).

In an embodiment, two switch devices 200 are provided. The following part will be illustrated with a first switch 210 and a second switch 220 by way of example.

In an embodiment, two server devices 300 are provided, e.g., a first server 310 and a second server 320. It is possible that only one server is provided, such as a server including multiple virtual machines.

The method for port configuration for the link aggregation system in this embodiment is applied to gateway device of a cross-device link aggregation system, such as the communication system shown in FIG. 2. The method includes at least operations S100 and S200.

At operation S100, a subnet route of the server device 300 is obtained.

In an embodiment, the server device 300 sends a host route corresponding to the server to the switch device 200. The switch device 200 sets the 32-bit mask subnet route corresponding to the server according to the host route corresponding to the server. The switch device 200 sends the 32-bit mask subnet route corresponding to the server to the gateway device 100. That is, the gateway device 100 obtains the 32-bit mask subnet route corresponding to the server device 300.

At operation S200, a mapping relationship is established with ports of the server 100.

In an embodiment, the gateway device 100 establishes a mapping relationship with the ports of the server device(s) 300 according to the 32-bit mask subnet route corresponding to the server device(s) 300. Further, the gateway device 100 establishes a mapping relationship with the ports of the switch device 200 and the server device(s) 300 according to the 32-bit mask subnet route corresponding to the server device(s) 300.

In another embodiment, the mapping relationship can be a state mapping relationship. The state mapping relationship can include the mapping relationship of uplink state and the mapping relationship of downlink state.

The configuration method set forth in this embodiment is advertised to the upstream device through a routing protocol in the way of route advertisement of 32-bit mask subnet route, to allow the upstream device(s) to learn the host routes of all downstream servers (or server virtual machines). In the upstream devices, there exists 32-bit mask subnet route instead of subnet route advertisement. In addition, the switch device 200 of the link aggregation system interfaces with the ports of the upstream gateway device, and performs port cooperation and binding with the ports of all the downstream server devices.

By adopting the configuration method set forth in this embodiment, when a failure in a link or a device in the link aggregation system occurs, the overall switching of the entire cross-device link aggregation network can be realized, and the system can continue to operate normally. In addition, the peer link between main and backup devices is eliminated, which can save network resources, improve the operation efficiency of network devices, simplify network operation and save network operation and maintenance costs.

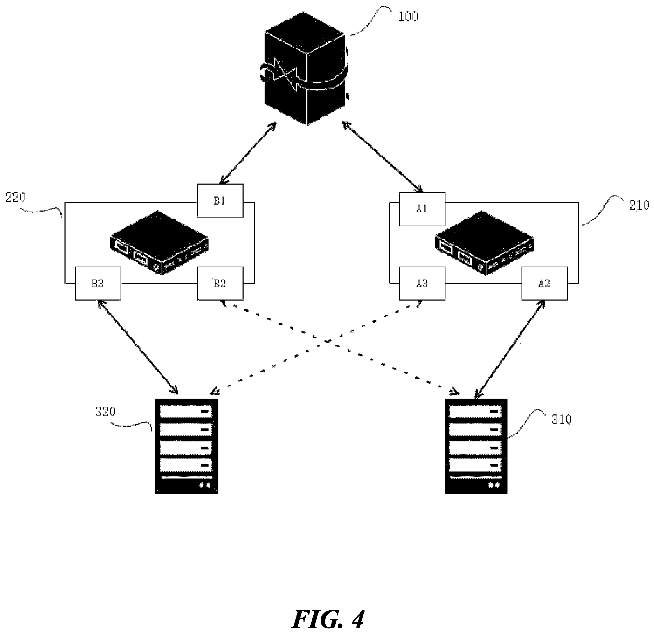

FIG. 4 depicts a schematic diagram showing a scenario where a method for switching communication state in a link aggregation system according to an embodiment of the present disclosure may be applied. As shown in FIG. 4, the link aggregation system includes a gateway device 100, a first switch 210, a second switch 220, a first server 310, and a second server 320.

The first switch 210 includes ports A1, A2 and A3. The second switch 220 includes ports B1, B2 and B3.

The gateway device 100 is in communicative connection with the first switch 210 through the port A1 and with the second switch 220 through the port B1.

The first server 310 establishes a main link with the first switch 210 through the port A2, and establishes a backup link with the second switch 220 through the port B2, for communicative connection.

The second server 320 establishes a main link with the second switch 220 through the port B3, and establishes a backup link with the first switch 210 through the port A3, for communicative connections.

After the link aggregation system of this embodiment is configured according to the above configuration method, switching can be realized when a failure in a link or a device in the system occurs, and ensure the system to continue normal operation.

The method for switching communication state set forth in this embodiment is further illustrated below in conjunction with different failure situations.

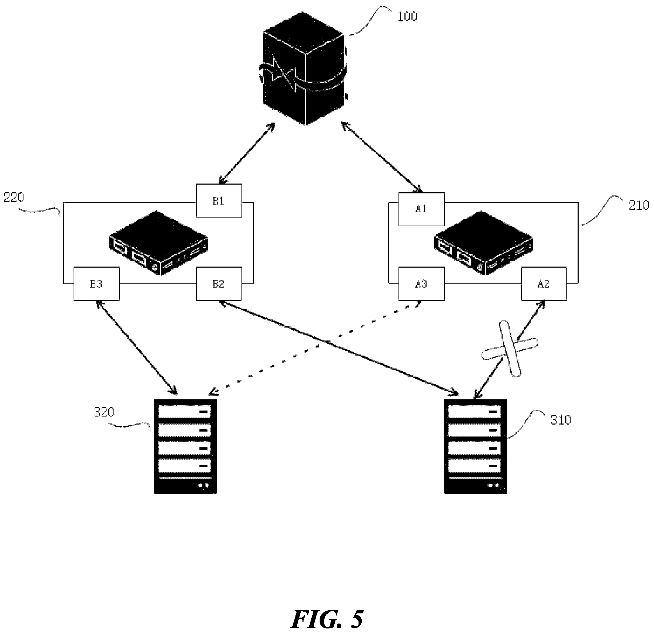

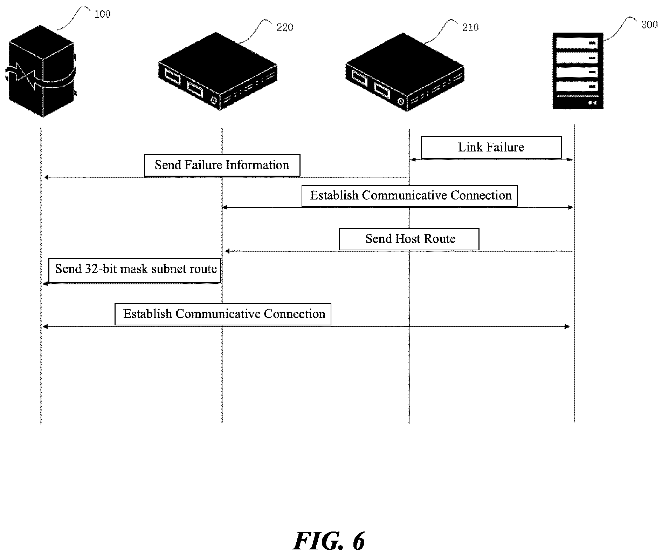

FIGS. 5 and 6 each depicts a schematic diagram showing a method for switching communication state in a link aggregation system according to an embodiment of the present disclosure. As shown in FIGS. 5 and 6, the link aggregation system includes a gateway device 100, a first switch 210, a second switch 220, a first server 310, and a second server 320. The first switch 210 includes ports A1, A2 and A3. The second switch 220 includes ports B1, B2 and B3. The gateway device 100 is in communicative connection with the first switch 210 through the port A1 and with the second switch 220 through the port B1. The first server 310 establishes a main link with the first switch 210 through the port A2, and establishes a backup link with the second switch 220 through the port B2, for communicative connections. The second server 320 establishes a main link with the second switch 220 through the port B3, and establishes a backup link with the first switch 210 through the port A3, for communicative connections.

The following operations are performed, in case a link or device failure occurs between the port A2 of the first switch 210 and the first server 310.

The port A2 of the first switch 210 is disconnected from the port of the first server 310, for example, the first switch 210 cancels the host route corresponding to the port of the failed link of the server. The first switch 210 sends failure information to the gateway device 100, in order to instruct the gateway device 100 to cancel the 32-bit mask subnet route corresponding to the port of the failed link. The server 310 switches the cancelled port to the backup link, i.e., the port B2 of the second switch 220, and establishes a communicative connection with the second switch 220 through the port B2. The second switch 220 receives the host route corresponding to the cancelled port of the server 310. The second switch 220 converts the above-mentioned host route into a 32-bit mask subnet route. The second switch 220 sends the 32-bit mask subnet route to the gateway device 100 through the port B1. The gateway device 100 establishes a communicative connection with the cancelled port of the server 310 through the second switch 220 according to the above 32-bit mask subnet route.

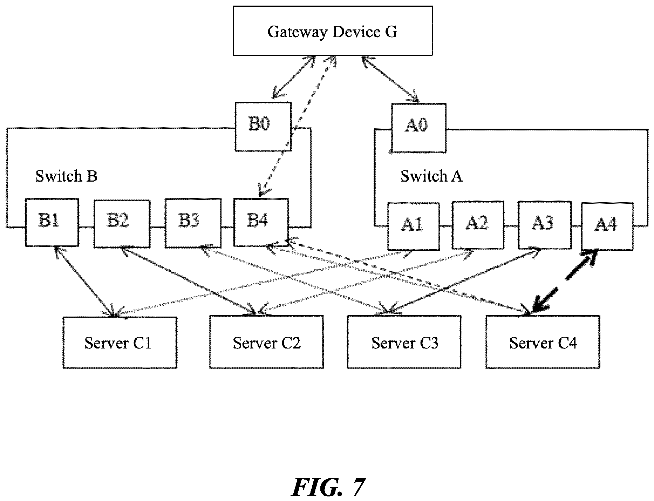

FIG. 7 depicts a schematic diagram showing a method for switching communication state in a link aggregation system according to an embodiment of the present disclosure. As shown in FIG. 7, the link aggregation system includes a gateway device G, switches A and B, and servers C1, C2, C3 and C4. Switch A includes ports A0, A1, A2, A3 and A4. Switch B includes ports B0, B1, B2, B3 and B4. Servers C1, C2, C3 and C4 respectively establish main links with ports B1, B2, A3 and A4, and respectively establish backup links with ports A1, A2, B3 and B4.

In an implementation, switch A connects servers C3 and C4 through a main link, and the IP addresses are 10.10.10.1 and 10.10.10.2, respectively. Switch B connects servers C1 and C2 through the main link, with IP addresses of 10.10.10.4 and 10.10.10.5 respectively; The netmask of IP addresses configured by servers C1, C2, C3 and C4 is 24 bits.

Servers C3 and C4 advertises the host routes 10.10.10.1 and 10.10.10.2 to switch A, while servers C1 and C2 advertise the host routes 10.10.10.4 and 10.10.10.5 to switch B.

When switches A and B perform advertisement to the upstream gateway device G, they do not advertise the 24-bit subnet routes 10.10.10.1, 10.10.10.2, 10.10.10.4, and 10.10.10.5, but convert these four host routes into 32-bit mask subnet routes and advertise them to the gateway device G.

The announcement can be performed by means of, for example, OSPF dynamic routing protocol. Switches A and B can modify the Link State Announcement (LSA) of the original OSPF announcements 10.10.10.1, 10.10.10.2, 10.10.10.4 and 10.10.10.5. Switch A generates two 32-bit OSPF LSAs for subnet routes of 10.10.10.1/32 and 10.10.10.2/32 by means of its own downstream host routes 10.10.10.1 and 10.10.10.2. Switch B generates two 32-bit OSPF LSAs for subnet routes of 10.10.10.4/32 and 10.10.10.5/32 by means of its own downstream host routes 10.10.10.4 and 10.10.10.5. Switches A and B respectively advertise their two 32-bit mask subnet routes to gateway device G through LSA packets of OSPF routing protocol. The advertisement can adopt various dynamic routing protocols or static routing advertisements, and which is not limited to OSPF protocol advertisements.

The gateway device G respectively learns these four 32-bit mask subnet routes from switches A and B, i.e., the four routes received from the route announcements of switches A and B. Since the 32-bit subnet routes of 10.10.10.1 and 10.10.10.2 are advertised by switch A, the next hop of these two routes is directed to switch A, and the 32-bit subnet route of 10.10.10.4 and 10.10.10.5 are advertised by switch B, so the next hop of these two routes is directed to switch B.

When a link failure occurs between the virtual machine of server C4 10.10.10.2 and switch A, the following operations are performed.

Switch A cancels its host route 10.10.10.2, and advertises the cancellation of the 32-bit subnet route of 10.10.10.2 to the upstream gateway device G. The virtual machine of server C4 10.10.10.2 switches to the backup path that is directed to switch B to establish a link with switch B. Then the switch B receives the host route of 10.10.10.2, and converts the host route into a 32-bit subnet route of 10.10.10.2 and advertise the same to gateway device G. The upstream gateway device G receives the advertisement of the 32-bit subnet route of 10.10.10.2 sent by switch B, and assigns the next hop of the route of 10.10.10.2 to switch B.

Through the scheme of the embodiment(s) of the present disclosure, it is ensured that when a failure occurs in the system, the subsequent packets can be forwarded normally after a complete link switching.

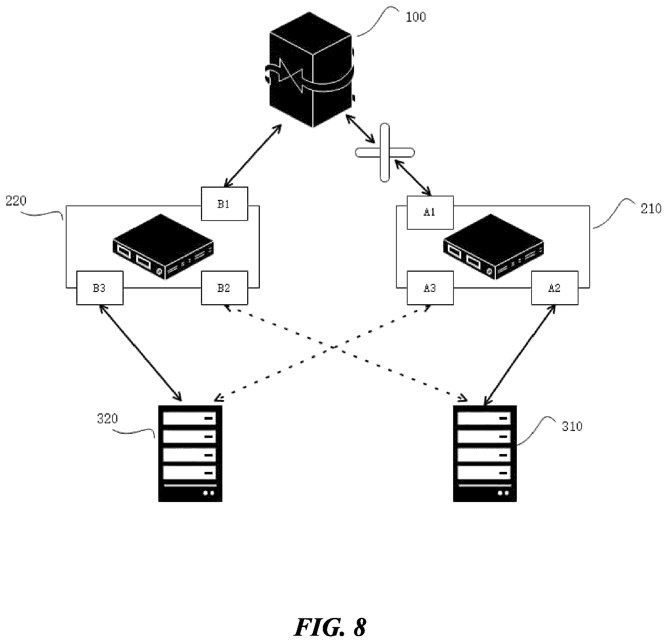

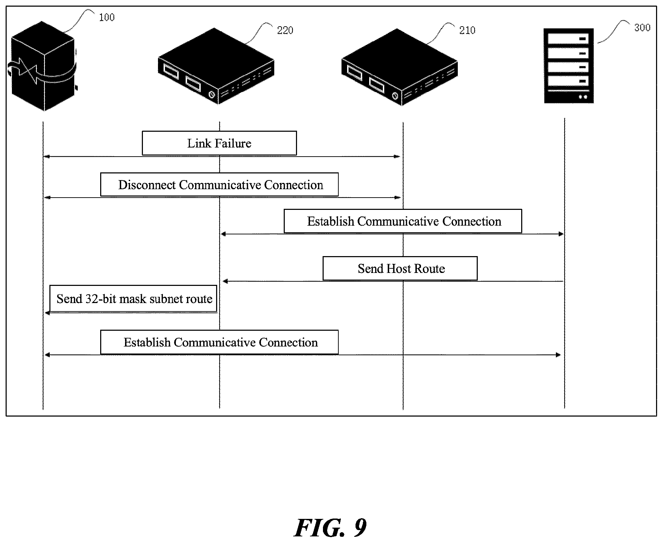

FIGS. 8 and 9 each depicts a schematic diagram showing a method for switching communication state in a link aggregation system according to an embodiment of the present disclosure. As shown in FIGS. 8 and 9, the link aggregation system includes a gateway device 100, a first switch 210, a second switch 220, a first server 310, and a second server 320. The first switch 210 includes ports A1, A2 and A3. The second switch 220 includes ports B1, B2 and B3. The gateway device 100 is in communicative connection with the first switch 210 through the port A1 and with the second switch 220 through the port B1. The first server 310 establishes a main link with the first switch 210 through the port A2, and establishes a backup link with the second switch 220 through the port B2, for communicative connections. The second server 320 establishes a main link with the second switch 220 through the port B3, and establishes a backup link with the first switch 210 through the port A3, for communicative connections.

When a link or device failure occurs between the gateway device 100 and the first switch 210, the following operations are performed. The first switch 210 is disconnected from the first server 310 and the second server 320, that is, the communicative connections of the ports A2 and A3 of the first switch 210 are disconnected, for example, the first switch 210 cancels the host route corresponding to the ports A2 and A3. The server 310 establishes a communicative connection with the second switch 220, and establishes a communicative connection with the port B2 of the second switch 220. The second switch 220 receives the host route corresponding to the server 310. The second switch 220 converts the above-mentioned host route into a 32-bit mask subnet route. The second switch 220 sends the 32-bit mask subnet route to the gateway device 100 through the port B1. The gateway device 100 establishes a communicative connection with the server 310 through the second switch 220 according to the above 32-bit mask subnet route.

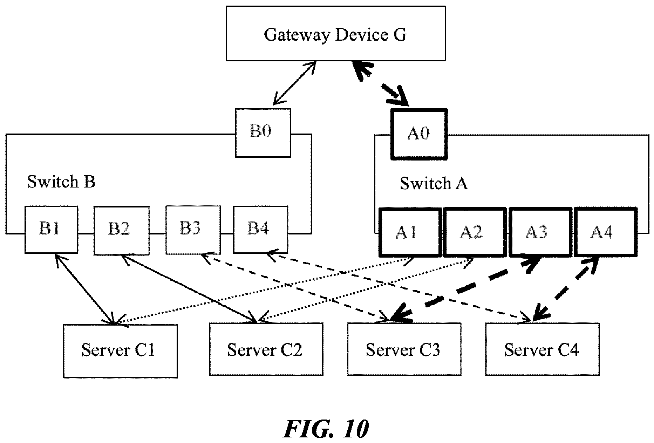

FIG. 10 depicts a schematic diagram showing a method for switching communication state in a link aggregation system according to an embodiment of the present disclosure. As shown in FIG. 10, the link aggregation system includes a gateway device G, switches A and B, and servers C1, C2, C3 and C4. Switch A includes ports A0, A1, A2, A3 and A4. Switch B includes ports B0, B1, B2, B3 and B4. Servers C1, C2, C3 and C4 respectively establish main links with ports B1, B2, A3 and A4, and respectively establish backup links with ports A1, A2, B3 and B4.

In an implementation, switch A connects servers C3 and C4 through a main link, and the IP addresses are 10.10.10.1 and 10.10.10.2, respectively. Switch B connects servers C1 and C2 through the main link, with IP addresses of 10.10.10.4 and 10.10.10.5 respectively; The netmask of IP addresses configured by servers C1, C2, C3 and C4 is 24 bits.

Servers C3 and C4 advertises the host routes 10.10.10.1 and 10.10.10.2 to switch A, while servers C1 and C2 advertise the host routes 10.10.10.4 and 10.10.10.5 to switch B.

When switches A and B perform advertisement to the upstream gateway device G, they do not advertise the 24-bit subnet routes 10.10.10.1, 10.10.10.2, 10.10.10.4, and 10.10.10.5, but convert these four host routes into 32-bit mask subnet routes and advertise them to the gateway device G.

The announcement can be performed by means of, for example, OSPF dynamic routing protocol. Switches A and B can modify the LSA of the original OSPF announcements of 10.10.10.1, 10.10.10.2, 10.10.10.4 and 10.10.10.5. Switch A generates two 32-bit OSPF LSAs for subnet routes of 10.10.10.1/32 and 10.10.10.2/32 by means of its own downstream host routes 10.10.10.1 and 10.10.10.2. Switch B generates two 32-bit OSPF LSAs for subnet routes of 10.10.10.4/32 and 10.10.10.5/32 by means of its own downstream host routes 10.10.10.4 and 10.10.10.5. Switches A and B respectively advertise their two 32-bit mask subnet routes to gateway device G through LSA packets of OSPF routing protocol. The advertisement can adopt various dynamic routing protocols or static routing advertisements, and which is not limited to OSPF protocol advertisements.

The gateway device G respectively learns these four 32-bit mask subnet routes from switches A and B, i.e., the four routes received from the route announcements of switches A and B. Since the 32-subnet routes of 10.10.10.1 and 10.10.10.2 are advertised by switch A, the next hop of these two routes is directed to switch A, and the 32-bit subnet route of 10.10.10.4 and 10.10.5 are advertised by switch B, so the next hop of these two routes is directed to switch B.

When a link failure between gateway device G and switch A occurs, the following operations are performed.

Link failure between gateway device G and switch A occurs. Since switch A has configured the port connections between the interface of gateway device G and the interfaces of each of the downstream servers C1, C2, C3 and C4, when switch A discovers the link failure with gateway device G, switch A synchronously shuts down all downstream links with servers C3 (10.10.10.4) and C4 (10.10.10.5).

When the servers C3 (10.10.10.4) and C4 (10.10.10.5) discover that the link and interfaces with switch A are all deactivated, the two servers each of the switches to the backup link and establishes a connection with switch B.

Since the connection between switch B and gateway device G is normal, the forwarding traffic of servers C3 (10.10.10.4), and C4 (10.10.10.5) are all switched to switch B to establish forwarding paths with gateway device G.

Through the scheme of the embodiment(s) of the present disclosure, it is ensured that when a failure occurs in the system, the subsequent packets can be forwarded normally after a complete link switching.

According to an embodiment of the present disclosure, a communication system is provided. The communication system includes a processor; and a memory storing instructions executable by the processor which, when executed by the processor, causes the processor to carry out the method described in any one of the embodiments above.

According to an embodiment of the present disclosure, a computer-readable storage medium or a computer program product is provided. The computer-readable storage medium or the computer program product stores a computer-executable instruction which, when executed by a processor, causes the processor to carry out the method described in any one of the embodiments above.

It shall be appreciated by a person having ordinary skills in the art that all or some of the steps, functional modules/units in the methods, systems and devices disclosed above can be implemented as software, firmware, hardware and their appropriate combinations.

In the hardware implementation, the division between functional modules/ units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

The terms "component", "module" and "system" used in this description are intended to refer to computer-related entities, hardware, firmware, a combination of hardware and software, or software in execution. For example, a component can be, but is not limited to, a process running by a processor, a processor, an object, an executable file, a thread of execution, a program, or a computer. By way of illustration, both an application running on a computing device and the computing device can be components. One or more components can reside in a process or thread of execution, and components can be located on one computer or distributed between two or more computers. In addition, these components can be executed from various computer-readable media having various data structures stored thereon. Components can communicate through local or remote processes, for example, according to signals with one or more data packets (for example, data from two components interacting with another component between a local system, a distributed system or a network, for example, the Internet interacting with other systems through signals).

Some embodiments of the present disclosure are illustrated above in conjunction with the drawings, and the present disclosure are not limited thereto. Any modification, equivalent substitution and improvement made by those skilled in the art without departing from the scope and essence of the present disclosure should be within the scope of the rights of present disclosure.

## Claims

1. A method for switching communication state in a link aggregation system, which is applied to a cross-device link aggregation system comprising a gateway device, a first switch, a second switch, and a server, the method comprising:
performing following operations, in response to a communication failure between a first switch port and a server port:
receiving failure information by the gateway device;
establishing a first communicative connection between the server port and a second switch port;
receiving a host route corresponding to the server port by the second switch;
generating a 32-bit mask subnet route according to the host route by the second switch;
receiving the 32-bit mask subnet route by the gateway device; and
establishing a second communicative connection with the server port through the second switch by the gateway device, according to the 32-bit mask subnet route.

2. The method as claimed in claim 1, wherein before the communication failure between the first switch port and the server port occurs, the method further comprises:
establishing, mapping relationships between the first switch port and a gateway device port and between the first switch port and the server port; and
establishing, mapping relationships between the second switch port and the gateway device port and between the second switch port and the server port.

3. The method as claimed in claims 1 or 2, wherein,
a peer link connecting the first switch and the second switch is absent from the cross-device link aggregation system.

4. The method as claimed in claims 1 or 2, wherein,
the first switch comprises at least a first port, the second switch comprises at least a second port, and the server comprises at least a third port;
before the communication failure between the first switch port and the server port occurs, the method comprises:
receiving a host route corresponding to the third port by the first switch;
generating a 32-bit mask subnet route corresponding to the third port according to the host route corresponding to the third port by the first switch; and
receiving the 32-bit mask subnet route corresponding to the third port by the gateway device.

5. The method as claimed in claim 4, wherein,
the communication failure between the first switch port and the server port comprises: link failure between the first port and the third port;
receiving the failure information by the gateway device, comprises: receiving by the gateway device the failure information sent by the first switch, in response to a disconnection of communicative connection between the first switch and the third port of the server, wherein the failure information comprises information about the disconnection of the communicative connection between the first switch and the third port;
establishing the first communicative connection between the second switch port and the server port, comprises: establishing a communicative connection between the second port switching path and the third port;
receiving the host route corresponding to the server port by the second switch, comprises: receiving by the second switch the host route corresponding to the third port;
generating the 32-bit mask subnet route by the second switch according to the host route, comprises: generating the 32-bit mask subnet route corresponding to the third port according to the host route corresponding to the third port by the second switch;
receiving the 32-bit mask subnet route by the gateway device comprises: receiving the 32-bit mask subnet route corresponding to the third port by the gateway device; and
establishing the second communicative connection with the server port by the gateway device through the second switch according to the 32-bit mask subnet route, comprises: establishing the second communicative connection with the third port through the second switch by the gateway device according to the 32-bit mask subnet route corresponding to the third port.

6. The method as claimed in any one of claims 1 to 5, wherein,
each of the gateway device port, the first switch port, the second switch port, and the server port at least comprises one of:
a physical port; or
a virtual port.

7. A method for switching communication state in a link aggregation system, which is applied to a cross-device link aggregation system comprising a gateway device, a first switch, a second switch, and a server, the method comprising:
performing following operations, in response to a communication failure between a gateway device port and a first switch port:
disconnecting a first communicative connection with the server by the first switch;
establishing a second communicative connection between a server port and a second switch port;
receiving a host route corresponding to the server port by the second switch;
generating a 32-bit mask subnet route according to the host route by the second switch;
receiving the 32-bit mask subnet route by the gateway device; and
establishing a third communicative connection with the server port by the gateway device through the second switch according to the 32-bit mask subnet route.

8. The method as claimed in claim 7, wherein before the communication failure between the gateway device port and the first switch port occurs, the method comprises:
establishing mapping relationships between the first switch port and the gateway device port and between the first switch port and the server port; and
establishing, mapping relationships between the second switch port and the gateway device port and between the second switch port and the server port.

9. The method as claimed in claims 7 or 8, wherein,
a peer link connecting the first switch and the second switch is absent from the cross-device link aggregation system.

10. The method as claimed in claims 7 or 8, wherein,
the first switch comprises at least a first port, the second switch comprises at least a second port, and the server comprises at least a third port;
before the communication failure between the gateway device port and the first switch port occurs, the method further comprises:
receiving, by the first switch, a host route corresponding to the third port;
generating, by the first switch, a 32-bit mask subnet route corresponding to the third port according to the host route corresponding to the third port; and
receiving, by the gateway device, the 32-bit mask subnet route corresponding to the third port.

11. The method as claimed in claim 10, wherein,
the communication failure between the gateway device port and the first switch port comprises: link failure between the gateway device and the first port of the first switch;
disconnecting the first communicative connection with the server by the first switch, comprises: disconnecting the communicative connection between first switch and the third port;
establishing the second communicative connection between the server port and the second switch port, comprises: establishing the second communicative connection between the second port and the third port;
receiving the host route corresponding to the server port by the second switch, comprising: receiving the host route corresponding to the third port by the second switch;
generating the 32-bit mask subnet route by the second switch according to the host route, comprises: generating the 32-bit mask subnet route corresponding to the third port according to the host route corresponding to the third port by the second switch;
establishing the third communicative connection with the server port by the gateway device through the second switch according to the 32-bit mask subnet route, comprises: establishing by the gateway device the third communicative connection with the third port through the second switch according to the 32-bit mask subnet route corresponding to the third port.

12. The method as claimed in any one of claims 7 to 11, wherein,
each of the gateway device port, the first switch port, the second switch port, and the server port at least comprises one of:
a physical port; or
a virtual port.

13. A method for port configuration in a link aggregation system, which is applied to a gateway device of a cross-device link aggregation system, the method comprising:
acquiring a subnet route according to a host route sent by a server, wherein the subnet route is a 32-bit mask subnet route; and
establishing a mapping relationship with a server port.

14. The method as claimed in claim 13, wherein,
the system further comprises a switch, and a server; and
acquiring the subnet route according to the host route sent by the server comprises:
receiving, by the switch, the host route sent by the server; and
generating, by the switch, the 32-bit mask subnet route according to the host route.

15. The method as claim in claims 13 or 14, wherein establishing the mapping relationship with the server port comprises:
establishing a state mapping relationship with the server port, wherein the state mapping relationship comprises at least one of:
mapping relation of uplink state; or
mapping relation of downlink state.

16. The method as claimed in claims 13 or 14, wherein the cross-device link aggregation system is prevented from comprising a peer link.

17. A communication system, comprising a processor; and a memory storing instructions executable by the processor which, when executed by a processor, causes the processor to carry out the method as claimed in any one of claims 1 to 12, or the method as claimed in any one of claims 13 to 16.

18. A computer-readable storage medium storing a computer-executable instruction which, when executed by a processor, causes the processor to carry out the method as claimed in any one of claims 1 to 12, or the method as claimed in any one of claims 13 to 16.

19. A computer program product, comprising a computer program or a computer instruction stored in a computer-readable storage medium which, when executed by a processor of a computer device, causes the computer device to carry out the method as claimed in any one of claims 1 to 12, or the method as claimed in any one of claims 13 to 16.
